# EUROPEAN PATENT APPLICATION

(11) **EP 4 037 367 A1**
(43) Date of publication of application: **03.08.2022**
(21) Application number: 22152588.4
(22) Date of filing: 21.01.2022
(51) Int. Cl.: H04W 24/02, H04W 24/08, H04W 24/10, H04W 84/12, H04W 36/24

(54) **QUALITY MONITORING**

(30) Priority: 27.01.2021 CA 3107283
(71) Applicant: Nokia Technologies Oy, 02610 Espoo (FI)
(72) Inventor: Dion, Gino, Quispamsis, E2G0E6 (CA); Boutilier, Steve, Lower Sackville, B4C 2W7 (CA); McAloney, Chris, Halifax, B3K 4L9 (CA); MacKenzie, Colin, Largo, 33773 (US)
(74) Representative: Nokia EPO representatives

(57) **Abstract**

An apparatus and a method for monitoring are disclosed. The solution comprises monitoring (200) performance indicators of connections of one or more terminal devices communicating with mesh access points of a wireless mesh network, storing (202) monitoring results, determining (204), based on the stored monitoring results, whether one or more of the terminal devices are experiencing service quality below a given threshold for a given amount of time and reporting (206) the results of the determination.

## Description

### Field

The exemplary and non-limiting embodiments of the invention relate generally to wireless communication systems. Embodiments of the invention relate especially to apparatuses and methods in wireless communication networks.

### Background

The use of wireless communication systems has been increasing constantly. Connections which previously utilized wired technology have been replaced with wireless systems. The same trend has been noticed both in residential and business environments. The wireless systems provide many advantages over the wired systems. For example, setting up a wireless system is much cheaper as there is not wiring involved. However, wireless systems must be planned carefully to ensure that there is good enough coverage in the whole planned area.

One method of designing a wireless local network is to use mesh networks which utilize mesh access points which serve terminal devices in the planned area. In a mesh network, the access points provide coverage for the area they are serving but also acts as a relay point to other access points. The access points generally do not have a wired connection. A mesh network has a root mesh access point which has a wired connection to external networks. In design of wireless networks, it is important to take care of the mesh access points placement so that complete and required coverage is obtained.

### Summary

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to a more detailed description that is presented later.

According to an aspect of the present invention, there is provided an apparatus of claim 1.

According to another aspect of the present invention, there is provided a method of claim 8.

According to another aspect of the present invention, there is provided a computer program of claim 15.

One or more examples of implementations are set forth in more detail in the accompanying drawings and the description below. Other features will be apparent from the description and drawings, and from the claims. The embodiments and/or examples and features, if any, described in this specification that do not fall under the scope of the independent claims are to be interpreted as examples useful for understanding various embodiments of the invention.

### List of drawings

Embodiments of the present invention are described below, by way of example only, with reference to the accompanying drawings, in which
Figure 1 illustrates an example of simplified wireless communication system;
Figures 2 and 3 are flowcharts illustrating some embodiments; and
Figure 4 illustrates a simplified example of an apparatus applying some embodiments of the invention.

### Description of some embodiments

The following embodiments are only examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may also contain features, structures, units, modules etc. that have not been specifically mentioned.

Some embodiments of the present invention are applicable to a user terminal, a terminal device, a communication device, an access point, a base station, a distributed realisation of an access point or base station, a network element of a communication system, a corresponding component, and/or to any communication system or any combination of different communication systems that support required functionality.

The protocols used, the specifications of communication systems, servers and user equipment, especially in wireless communication, develop rapidly. Such development may require extra changes to an embodiment. Therefore, all words and expressions should be interpreted broadly and they are intended to illustrate, not to restrict, embodiments.

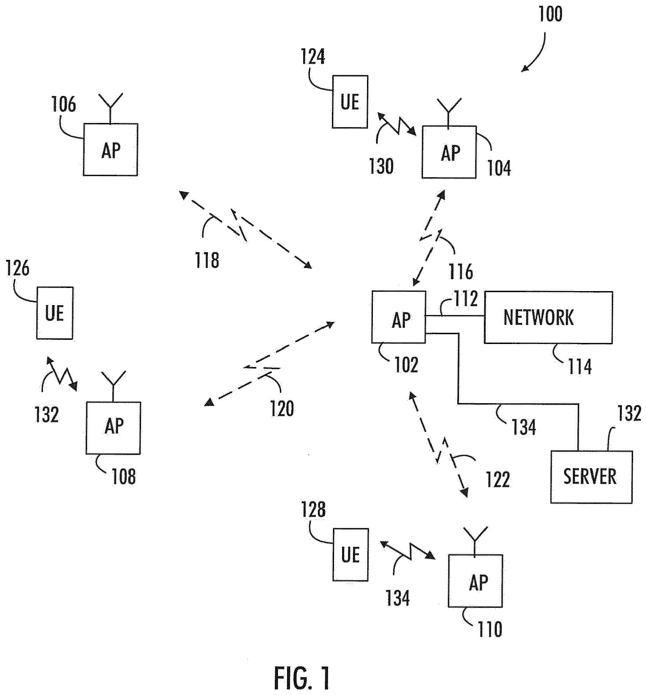

Fig. 1 depicts an example of simplified system architecture only showing some elements and functional entities, all being logical units, whose implementation may differ from what is shown. The connections shown in Fig. 1 are logical connections; the actual physical connections may be different. It is apparent to a person skilled in the art that the system typically comprises also other functions and structures than those shown in Fig. 1.

The embodiments are not, however, restricted to the system given as an example but a person skilled in the art may apply the solution to other communication systems provided with necessary properties.

The example of Fig. 1 shows a part of a wireless communication network 100. In an embodiment, the network is a wireless local area network (WLAN or Wi-Fi, IEEE 802.11 standard). However, the network may also be a worldwide interoperability for microwave access (WiMAX), Bluetooth^{®}, personal communications services (PCS), ZigBee^{®}, or any other network supporting required functionalities.

In an embodiment, the network 100 is a wireless mesh network comprising mesh access points 102, 104, 106, 108, 110. Of the access points the access point 102 is a root mesh access point comprising a wired connection 112 to a network 114 which may be Internet or any other suitable communication network, of comprises. The rest of the mesh access point are in wireless connection 116, 118, 120, 122 to at least one other access point of the network. The network of Fig. 1 may have been installed in residential or business premises. Fig. 1 shows terminal devices 124, 126, 128 communicating 130, 132, 134 with access points.

When a wireless network such as the network of Fig.1 is designed or planned, determining the number of mesh access-points required in a building or a residential setting is a very cumbersome and often complex process. There are a wide variety of variable that can impact these requirements, such as the size of the dwelling, construction materials, quality of the access-point antenna design, quality of the wireless reception chipsets in the user-devices, and the amount of radio interference in the environment. It may be difficult to determine how many access points are needed are where they should be installed.

There are a variety of tools available that allow mapping of physical network environment, and creation of a Wi-Fi heatmap, for example. They can indeed provide much better results but are typically based on a view and analysis of the environment at a single point in time. The electro-magnetic spectrum in the environment is constantly in flux and changing and may be at the mercy of time-based interference and challenges. Further, this leads often at more significant costs for the service provider or end user due to the extra time required to perform this analysis. As well, it does not take into consideration the idiosyncrasies of Wi-Fi performance of every end-user device, which don't reflect the same Wi-Fi performance from the results of the software tools utilized to perform the mapping analysis.

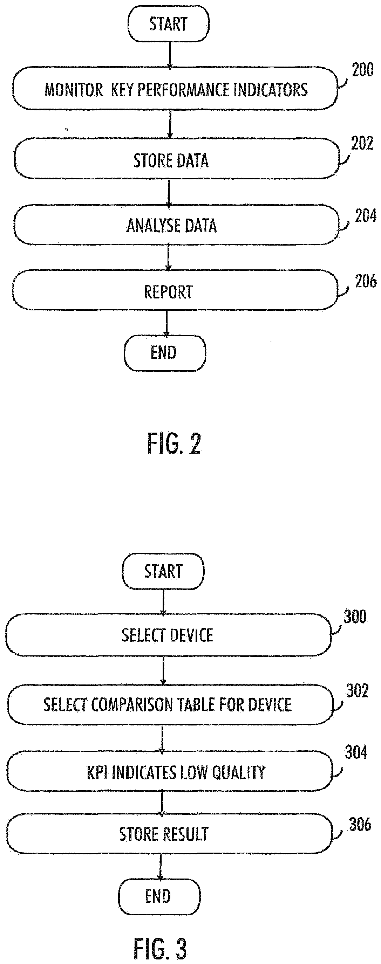

The flowchart of Fig. 2 illustrates an embodiment. The flowchart illustrates an example of the operation of an apparatus 132. In an embodiment, the apparatus may be a server or a computer or cloud-based computing device.

In an embodiment, the apparatus 132 is operationally connected to a root wireless mesh access point of a mesh network. In an embodiment, the apparatus may be a part of the root mesh access point.

In step 200, the apparatus is configured to monitor performance indicators of connections of one or more terminal devices communicating with mesh access points of a wireless mesh network.

In an embodiment, the performance indicators comprise one or more of the following: received signal strength indicator of a wireless connection; number of packets lost in a wireless connection; bandwidth throughput of a wireless connection.

In step 202, the apparatus is configured to store monitoring results. The results may be stored in the apparatus or to a database operationally connected to the apparatus.

In step 204, the apparatus is configured to determine, based on the stored monitoring results, whether one or more of the terminal devices are experiencing service quality below a given threshold for a given amount of time. Examples of determination are described below.

In step 206, the apparatus is configured to report the results of the determination. In an embodiment, the apparatus receives a request for the report and transmits the report as a response to the request. In an embodiment, the results are transmitted automatically to a given recipient.

In an embodiment, the report comprises one or more of the following: one or more terminal devices experiencing service quality below a given threshold, the mesh access points the one or more terminal devices are communicating with and customer accounts of the one or more terminal devices.

Thus, in an embodiment, various key performance indicators, KPIs, are collected and analysed of the wireless network. the data may be collected from the root mesh access-point. The collection of this data can be performed in a variety of ways, using industry standard data models such as Broadband Forum TR-069, TR-369 and TR-181, Extensible Messaging and Presence Protocol XMPP, Simple Network Management Protocol SNMP, Hypertext Transfer Protocol (HTTP) Rest-Interfaces and Application Programming Interfaces API, or proprietary messaging and signalling, for example.

The collected data may then be stored in a database on the access point, a server or in a cloud service, for further analysis. It may be noted that there is no need to collect any data from the communicating terminal devices themselves, as most often the necessary wireless performance data isn't exposed or made available to 3rd parties. It is important to also consider the transient nature of those devices, as they may join and leave the wireless environment at any time, and for any period of time.

The proposed solution provides an innovative way for service providers to have a reliable and verifiable means of predicting the need for additional wireless coverage via the addition of wireless Mesh access-points, at one or many of their end-user's residences, increasing service reliability while reducing support operational costs. The proposed solution allows the service operator to automatically get advanced notice that a particular end-user is experiencing wireless performance issues, on a specific device (or multiple devices), that can be resolved with the addition of an additional wireless mesh access-point in the residential dwelling.

Having the ability to identify specific devices suffering from wireless performance issues simplifies the process of localizing the best physical location for any additional wireless access-points

Further, the proposed solution allows end-user himself to automatically get advanced notice that a particular device in the home is experiencing wireless performance issues, that can be resolved with the addition of an additional wireless mesh access-point in the residential dwelling. Thus, possible support costs related to service calls may be reduced while also explicit wireless performance data is provided and guidance on the proper number of wireless mesh access-points for the given environment, and where they should be located.

In an embodiment, a comparison table may be utilized in the determination, where values for performance indicators are related to service quality and utilizing a table. The unit used to denote signal strength may vary depending on the measured KPI. Table 1 illustrates an example, where measured values of the Received Signal Strength Indicator (RSSI) of a connection are related to signal quality of the connection. The table may be utilized in connection with other KPI values.

**Table 1**

| RSSI [dB] | Quality |
|---|---|
| -20 to -50 | 100% of signal strength |
| -51 to -55 | 90% of signal strength |
| -56 to -62 | 80% of signal strength |
| -63 to -65 | 70% of signal strength |
| -66 to -68 | 60% of signal strength |
| -69 to -74 | 50% of signal strength |
| -75 to -79 | 40% of signal strength |
| -80 to -84 | 30% of signal strength |
| -85 to -89 | 20% of signal strength |
| -90 or worse | unusable |

In an embodiment, using the comparison table, and other historical KPI data collected, it is possible to determine how often (as a percentage of time) are certain devices below a given threshold with a certain level of packet loss (i.e. greater than 0). Any given device that spends more than a given portion (for example 50%) of their time below a given threshold gets flagged, as does the customer account and wireless access point it's associated to.

For example, if the RSSI of a given connection is monitored to be under a given threshold, say for example -75 dB, with a certain level of packet loss, 50% of time, the connection may be reported. The threshold value and the given time percentage are adjustable system parameters.

In an embodiment, the report generated based on the determination may comprise one or more of the following: one or more terminal devices experiencing service quality below a given threshold, the mesh access points the one or more terminal devices are communicating with and customer accounts of the one or more terminal devices. The access points may be identified with the Media Access Control (MAC) addresses, for example.

The report can be provided back to a service provider or end user automatically, or manually (on-demand), in a variety of forms. For example, as a document (PDF, CSV, etc), as a visual notification in a graphical user interface or via APIs for troubleshooting or marketing purposes.

Since not all wireless devices offer the same performance, the comparison table can be dynamic in nature and can be adapted uniquely and specifically for each individual device type connecting to the wireless network. Tables with different relations for different types of terminal devices may be stored. A table to be used in determination is selected based on the type of terminal device.

The flowchart of Fig. 3 illustrates an embodiment. The flowchart illustrates an example of the operation of an apparatus 132. In an embodiment, the apparatus may be a server or a computer or cloud-based computing device.

In step 300, the apparatus is configured to select a terminal device communicating with an access point and to determine the type of the terminal device.

In step 302, the apparatus is configured to select a comparison table to be used based on the type of the terminal device.

In step 304, the apparatus is configured to monitor KPIs of the connection of the terminal device and to determine that the service quality indicates low quality

In step 306, the apparatus is configured to store the result.

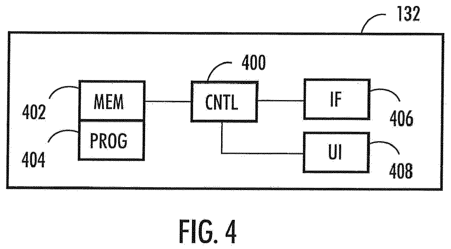

Fig. 4 illustrates an embodiment. The figure illustrates a simplified example of an apparatus 132 applying embodiments of the invention. It should be understood that the apparatuses are depicted herein as examples illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

In some embodiments, the apparatus may be a server, a computer, an access point, or any apparatus comprising required functionalities.

The apparatus 132 of the example includes a control circuitry 400 configured to control at least part of the operation of the apparatus.

The apparatus may comprise a memory 402 for storing data. Furthermore, the memory may store software 404 executable by the control circuitry 400. The memory may be integrated in the control circuitry.

The apparatus may comprise one or more interface circuitries 406. The interface circuitries are operationally connected to the control circuitry 400. An interface circuitry 406 provides connections required by the apparatus. For example, with the interfaces the apparatus may be operationally connected to the root access point 102. The connection may be wired or wireless. The apparatus may also be a root access point itself. The interface circuitries may be connected to an antenna arrangement (not shown). The apparatus may further comprise a user interface 408.

In an embodiment, the software 404 may comprise a computer program comprising program code means adapted to cause the control circuitry 400 of the apparatus to realise at least some of the embodiments described above.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An embodiment provides a computer program embodied on a distribution medium, comprising program instructions which, when loaded into an electronic apparatus, are configured to control the apparatus to execute the embodiments described above.

The computer program may be in source code form, object code form, or in some intermediate form, and it may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or it may be distributed amongst several computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

In an embodiment, an apparatus comprises at least one processor; and at least one memory including computer program code, the at least one memory and computer program code configured to, with the at least one processor, cause the apparatus to: monitor performance indicators of connections of one or more terminal devices communicating with mesh access points of a wireless mesh network; store monitoring results; determine, based on the stored monitoring results, whether one or more of the terminal devices are experiencing service quality below a given threshold for a given amount of time; report the results of the determination.

In an embodiment, a non-transitory computer readable medium comprising program instructions for causing an apparatus at least to perform: monitor performance indicators of connections of one or more terminal devices communicating with mesh access points of a wireless mesh network; store monitoring results; determine, based on the stored monitoring results, whether one or more of the terminal devices are experiencing service quality below a given threshold for a given amount of time; report the results of the determination.

It will be obvious to a person skilled in the art that, as the technology advances, the inventive concept can be implemented in various ways. The invention and its embodiments are not limited to the examples described above but may vary within the scope of the claims.

## Claims

1. An apparatus (132) comprising:
means for monitoring performance indicators of connections (130, 132, 134) of one or more terminal devices (124, 126, 128) communicating with mesh access points (102, 104, 108, 110) of a wireless mesh network (100);
means for storing monitoring results;
means for determining, based on the stored monitoring results, whether one or more of the terminal devices are experiencing service quality below a given threshold for a given amount of time; and
means for reporting the results of the determination.

2. The apparatus of claim 1, comprising means for obtaining the performance indicators of connections of the one or more terminal devices from a root wireless mesh access point (102).

3. The apparatus of any preceding claim, comprising means for storing one or more tables comprising relations of values for performance indicators and service quality and utilizing a table in the determination.

4. The apparatus of claim 3, comprising
means for storing tables with different relations for different types of terminal devices and
means for selecting a table to be used in the determination based on the type of terminal device.

5. The apparatus of any preceding claim, wherein the performance indicators comprise one or more of the following:
received signal strength indicator of a wireless connection (130, 132, 134);
number of packets lost in a wireless connection;
bandwidth throughput of a wireless connection.

6. The apparatus of any preceding claim, comprising means for generating a report comprising one or more of the following:
one or more terminal devices experiencing service quality below a given threshold;
the mesh access points the one or more terminal devices are communicating with; and
customer accounts of the one or more terminal devices.

7. The apparatus of any preceding claim, comprising
means for receiving a request for the report; and
means for transmitting the report as a response to the request.

8. A method in an apparatus comprising:
monitoring (200) performance indicators of connections (130, 132, 134) of one or more terminal devices (124, 126, 128) communicating with mesh access points (102, 104, 108, 110) of a wireless mesh network (100);
storing (202) monitoring results;
determining (204), based on the stored monitoring results, whether one or more of the terminal devices are experiencing service quality below a given threshold for a given amount of time; and
reporting (206) the results of the determination.

9. The method of claim 8, further comprising:
obtaining the performance indicators of connections of the one or more terminal devices from a root wireless mesh access point (102).

10. The method of claim 8 or 9, further comprising:
storing one or more tables comprising relations of values for performance indicators and service quality and
utilizing a table in the determination.

11. The method of claim 10, further comprising:
storing tables with different relations for different types of terminal devices and
selecting a table to be used in the determination based on the type of terminal device.

12. The method of any preceding claim 8 to 11, wherein the performance indicators comprise one or more of the following:
received signal strength indicator of a wireless connection (130, 132, 134);
number of packets lost in a wireless connection;
bandwidth throughput of a wireless connection.

13. The method of any preceding claim 8 to 12, further comprising:
generating a report comprising one or more of the following:
one or more terminal devices experiencing service quality below a given threshold;
the mesh access points the one or more terminal devices are communicating with; and
customer accounts of the one or more terminal devices.

14. The method of any preceding claim 8 to 13, further comprising:
receiving a request for the report; and
transmitting the report as a response to the request.

15. A computer program comprising instructions for causing an apparatus (132) at least to perform:
monitor (200) performance indicators of connections (130, 132, 134) of one or more terminal devices (124, 126, 128) communicating with mesh access points (102, 104, 108, 110) of a wireless mesh network (100);
store (202) monitoring results;
determine (204), based on the stored monitoring results, whether one or more of the terminal devices are experiencing service quality below a given threshold for a given amount of time; and
report (206) the results of the determination.
